# EUROPÄISCHE PATENTSCHRIFT

(11) **EP 0 662 416 B1**
(45) Veröffentlichungstag und Bekanntmachung des Hinweises auf die Patenterteilung: **04.09.1996**
(21) Anmeldenummer: 94118929.2
(22) Anmeldetag: 01.12.1994
(51) Int. Cl.: B62D 21/15, B62D 31/00

(54) **Stirnwandaufbau für einen Kraftwagen mit vorn angeordneter Antriebseinheit**
Fire wall for a front-engined motor vehicle
Cloison séparatrice pour un véhicule automobile ayant un moteur à l'avant

(30) Priorität: 05.01.1994 DE 4400132
(43) Veröffentlichungstag der Anmeldung: 12.07.1995
(73) Patentinhaber: MERCEDES-BENZ AG, 70327 Stuttgart (DE)
(72) Erfinder: Heiss, Werner, Dipl.-Ing., D-71063 Sindelfingen (DE); Weller, Martin, Dipl.-Ing., D-74427 Fichtenberg (DE); Eipper, Konrad, Dipl.-Ing., D-72119 Ammerbuch (DE)

(56) Entgegenhaltungen:
- WO-A-92/20563
- DE-A- 2 118 506
- US-A- 3 743 347
- PATENT ABSTRACTS OF JAPAN vol. 4 no. 139 (M-34) [621] ,30.September 1980 & JP-A-55 094863 (MIKIO KOUYA) 18.Juli 1980,
- KRAFTHAND, Bd. 67,Nr. 1/2, 22.Januar 1994 Seiten 20-24, 'LEICHTBAU JA, ABER WIE?'
- WIE?'

## Beschreibung

Die Erfindung betrifft einen Stirnwandaufbau für einen Kraftwagen mit vorn angeordneter Antriebseinheit

Bei einem Frontalaufprall wirkt sich die Antriebseinheit als nicht deformierbarer Block nachteilig auf die notwendige Crashdeformationslänge aus.

Um diese zu vergrössern, wurde (siehe WO-A-9220563) eine Stirnwand gemäß den Oberbegriff des Anspruchs 1 für den bei einem Frontalaufprall nach hinten verschobenen Antriebsmotor vorgeschlagen. Gemäß dieser Druckschrift sind die Antriebseinheit und die Stirnwand so angeordnet, daß die Antriebseinheit sich während des Crashs zur Stirnwand hin bewegen kann und nach Kontakt mit der Stirnwand an dieser unter das Fahrzeug abgleiten kann.
Das Problem bei einer solchen Anordnung ist, daß Teile der Antriebseinheit in die Stirnwand eindringen und sich mit der Stirnwand verhaken können. Das Abgleiten der Antriebseinheit unter das Fahrzeug wird dadurch verhindert, oder doch zumindest behindert.

Der Erfindung lag die Aufgabe zugrunde, eine Intrusion von Teilen der Antriebseinheit in die Stirnwand zu verhindern und den Abgleitvorgang der Antriebseinheit an dem Stirnwandaufbau zu unterstützen.

Diese Aufgabe wird durch die Merkmale des kennzeichnenden Teiles des Anspruches 1 gelöst.

Besonders vorteilhafte Ausgestaltungen der Erfindung sind den weiteren Patentansprüchen zu entnehmen.

Der Gegenstand der Erfindung soll im folgenden anhand von in den Zeichnungen dargestellten Ausführungsbeispielen näher erläutert werden.

In der Zeichnung zeigen:
Fig. 1 einen Schnitt in einer Mittellängsebene durch einen Kraftwagenvorbau,
Fig. 2 eine Darstellung entsprechend Fig. 1, eines prinzipiellen Aufbaus der Stirnwandanordnung,
Fig. 3 eine Darstellung entsprechend Fig. 2, einer anderen Ausführungsform eines prinzipiellen Aufbaus der Stirnwandanordnung, und die
Fig. 4a, 4b und 4c, drei Ausführungsbeispiele von Sandwichplatten.

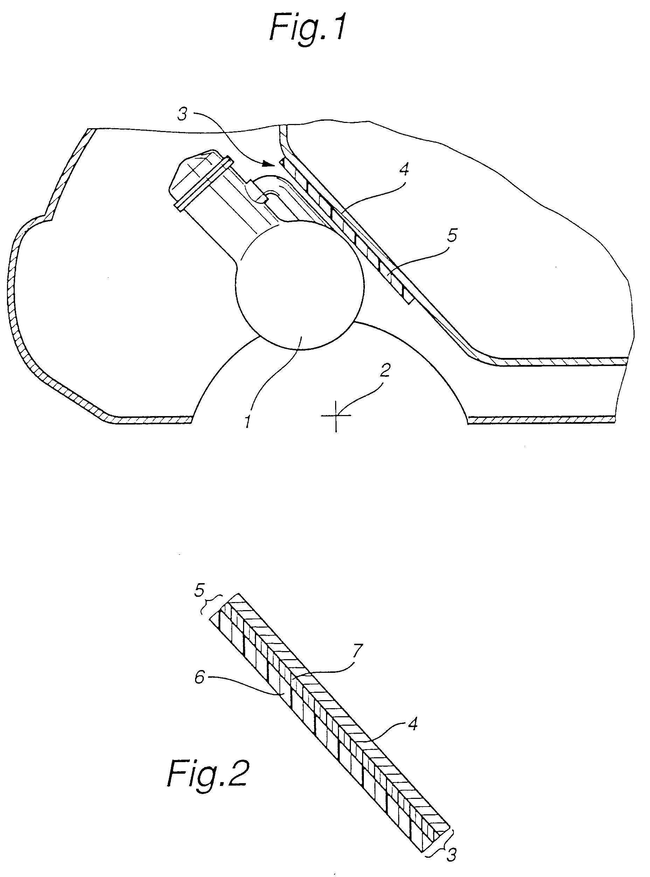

Der in der Figur 1 teilweise dargestellte Vorbau eines Kraftwagens weist einen Antriebsmotor bzw. eine Antriebseinheit 1 auf. Sie ist in Form eines quer eingebauten Hubkolbenmotors unter einem Winkel von etwa 30° zur Horizontalen geneigt derart angeordnet, daß sie sich mit wesentlichen Bereichen hinter der Vorderachse 2 erstreckt und nur Teile der Zylinder oberhalb der Vorderachse 2 liegen.

Unter dem gleichen Winkel, unter dem der Antriebsmotor 1 zur Horizontalen geneigt ist, verläuft benachbart zu diesem ein Stirnwandaufbau 3.

Bei einem Frontalaufprall wird der Vorbau des Kraftwagens verkürzt und der Antriebsmotor bzw. die Antriebseinheit 1 an dem Stirnwandaufbau 3 entlang nach unten verschoben, ohne in die Fahrgastzelle einzudringen.

Der Stirnwandaufbau 3 besteht aus der Stirnwand 4 und aus einer Abgleithilfe 5. Die Abgleithilfe 5 ist an der Stirwand so befestigt, daß mindestens ein Teil der Abgleithilfe 5 nach einer von einem Frontalaufprall verursachten Beanspruchung auf Abscherung an der Stirnwand abgleitet. Durch das Abgleiten eines Teiles der Abgleithilfe an der Stirnwand wird eine Intrusion von Teilen der Antriebseinheit 1 in die Stirnwand 4 verhindert. Dadurch wird der Abgleitvorgang der Antriebseinheit unter das Fahrzeug unterstützt.

Die Figur 2 zeigt eine erste Ausführungsform des Stirnwandaufbaus, in der die Abgleithilfe 5 eine Sandwichplatte 6 aufweist. Die Sandwichplatte 6 ist mit in der Figur nicht näher dargestellten Nieten, Schrauben (Dehnschrauben) oder anderen Befestigungsmitteln mit der Stirnwand 4 verbunden.

Nach dem Kontakt der Antriebseinheit 1 mit dem Stirnwandaufbau 3 können Teile der Antriebseinheit in die Sandwichplatte 6 eindringen und sich mit dieser verhaken. Danach reißen die Befestigungen zwischen der Sandwichplatte 6 und der Stirnwand 4. Die Sandwichplatte 6 mit der darin verhakten Antriebseinheit 1 gleitet an der Stirnwand 4 ab. Dafür muß selbstverständlich die Verbindungstechnik (Nieten, Schrauben, etc.) so ausgewählt sein, daß die Verbindung nach einer von einem Frontalaufprall verursachten Beanspruchung auf Abscherung reißt.

Zwischen Sandwichplatte 6 und Stirnwand 4 kann noch eine Gleitschicht 7 vorgesehen sein, die Korrosion verhindert und die Reibung vermindert. Diese Gleitschicht 7 ist vorzugsweise als eine Kunststoffplatte ausgebildet. Es ist weiterhin möglich, zwischen die Sandwichplatte 6 und die Stirnwand 4 eine Gleitschicht 7 mit mikroverkapseltem Schmierstoff einzubringen.

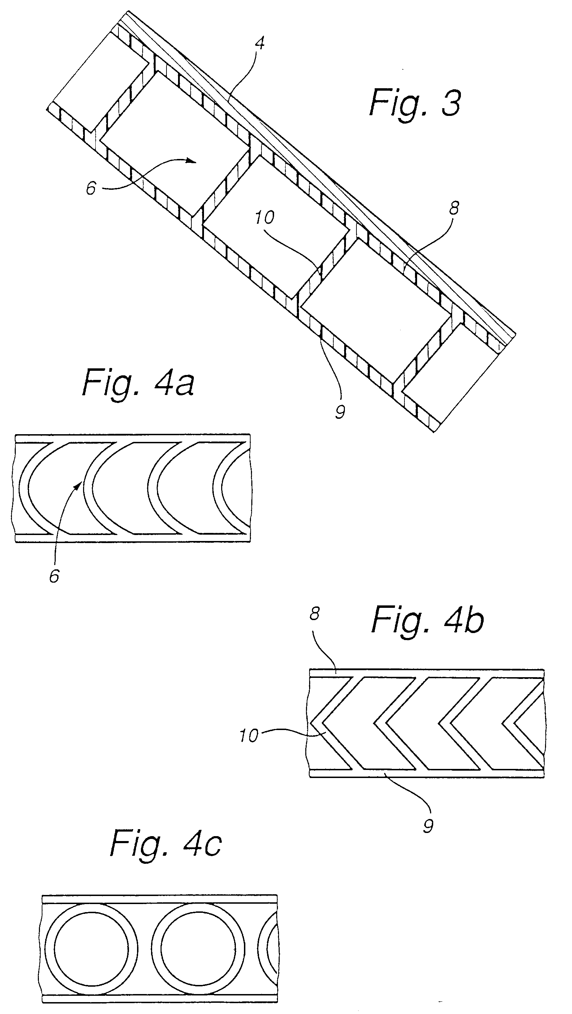

Wie Fig. 3 zeigt, kann die Sandwichplatte 6 auch aus einer Oberplatte 8 und einer mit der Oberplatte durch Stege 10 verbundenen Unterplatte 9 bestehen. Bei dieser Ausführungsform ist die Oberplatte 8 an der stirnwand 4 so befestigt, daß die Verbindung zwischen der Oberplatte 8 und der Stirwand 4 bei einem Frontalaufprall erhalten bleibt. Es reißen vielmehr die Verbindungen zwischen oberplatte 8 und Unterplatte 9, indem die Stege 10 brechen. Darüberhinaus leiten die Stege 10 durch ihre geometrische Form eine Bewegung parallel zur Abgleitfläche ein.

Drei unterschiedliche bevorzugte Ausführungsbeispiele der Sandwichplatte 5 sind den Figuren 4a bis 4c zu entnehmen. Die Form der Stege 10 kann also vielseitig variiert werden: in der Figur 4a sind die Stege 10 halbkreisförmig; in der Figur 4b sind sie V-förmig und in der Figur 4c bilden die zwischen Oberplatte 8 und Unterplatte 9 liegenden Stege 10 komplette Kreise.

Die Sandwichplatte 6, sowohl nach der Figur 2 als auch nach der Figur 3, kann aus sprödem Kunststoff gefertigt sein.

Wichtig ist auf jeden Fall, daß die Abgleithilfe 5 so an der Stirnwand 4 befestigt ist, daß mindestens ein Teil der Abgleithilfe 5 nach einer von einem Frontalaufprall verursachten Beanspruchung auf Abscherung an der Stirnwand 4 abgleitet.

## Patentansprüche

1. Stirnwandaufbau für einen Kraftwagen mit vorn angeordneter Antriebseinheit mit einer Stirnwand für die bei einem Frontalaufprall nach hinten verschobenen Antriebseinheit
**gekennzeichnet durch**
eine an der Stirnwand (4) so befestigte Abgleithilfe (5), daß mindestens ein Teil der Abgleithilfe (5) nach einer von einem Frontalaufprall verursachten Beanspruchung auf Abscherung an der Stirnwand (4) abgleitet.

2. Stirnwandaufbau nach Anspruch 1,
**dadurch gekennzeichnet**,
daß die Abgleithilfe (5) eine Sandwichplatte (6) aufweist.

3. Stirnwandaufbau nach Anspruch 2,
**dadurch gekennzeichnet**,
daß die Sandwichplatte (6) so ausgebildet ist, daß Teile der Antriebseinheit (1) nach einem Frontalaufprall in die Sandwichplatte (6) eindringen, mit dieser verhaken und diese auf Abscherung beanspruchen.

4. Stirnwandaufbau nach Anspruch 2 oder 3,
**dadurch gekennzeichnet**,
daß die Abgleithilfe (5) weiterhin eine zwischen Sandwichplatte (6) und Stirnwand (4) vorgesehene, die Korrosion verhindernde und die Reibung vermindernde Gleitschicht (7) aufweist.

5. Stirnwandaufbau nach Anspruch 4,
**dadurch gekennzeichnet**,
daß diese Gleitschicht (7) als Kunststoffplatte ausgebildet ist.

6. Stirnwandaufbau nach Anspruch 4 oder 5,
**dadurch gekennzeichnet**,
daß diese Gleitschicht (7) als eine aus mikroverkapseltem Schmierstoff bestehende Schicht ausgebildet ist.

7. Stirnwandaufbau nach einem oder mehreren der vorhergehenden Ansprüche,
**dadurch gekennzeichnet**,
daß eine nach einer von einem Frontalaufprall verursachten Beanspruchung auf Abscherung lösbare Verbindung zwischen Abgleithilfe (5) und Stirnwand (4) bzw. zwischen Sandwichplatte (6), Gleitschicht (7) und Stirnwand (4), wie z.B. Nieten oder Schrauben (Dehnschrauben), vorgesehen ist.

8. Stirnwandaufbau nach einem oder mehreren der vorhergehenden Ansprüche 2 bis 7,
**dadurch gekennzeichnet**,
daß die Sandwichplatte (6) aus einer an der Stirwand (4) befestigten Oberplatte (8) und einer mit der Oberplatte (8) durch nach einer von einem Frontalaufprall verursachten Beanspruchung auf Abscherung zerstörbare Stege (10) verbundenen Unterplatte (9) besteht.

9. Stirnwandaufbau nach Anspruch 8,
**dadurch gekennzeichnet**,
daß die Verbindung zwischen Oberplatte (8) und Stirwand (4) bei einer von einem Frontalaufprall verursachten Beanspruchung auf Abscherung erhalten bleibt.

10. Stirnwandaufbau nach Anspruch 8 oder 9,
**dadurch gekennzeichnet**,
daß die Ausbildung der Stege (10) eine Bewegung der Unterplatte parallel zur Abgleitfläche einleiten.

11. Stirnwandaufbau nach einem oder mehreren der vorhergehenden Ansprüche 2 bis 10,
**dadurch gekennzeichnet**,
daß die Sandwichplatte (6) aus sprödem Kunstoff gefertigt ist.

## Claims

1. Scuttle structure for a motor vehicle having a drive unit arranged at the front having a scuttle for the drive unit which is displaced to the rear in the event of a head-on collision, characterised by a slide-down aid (5) which is fastened to the scuttle (4) in such a way that, after shearing stress caused by a head-on collision, at least part of the slide-down aid (5) slides down the scuttle (4).

2. Scuttle structure according to Claim 1, characterised in that the slide-down aid (5) has a sandwich board (6).

3. Scuttle structure according to Claim 2, characterised in that the sandwich board (6) is designed in such a way that, after a head-on collision, parts of the drive unit (1) penetrate into the sandwich board (6), catch on it and subject it to shearing stress.

4. Scuttle structure according to Claim 2 or 3, characterised in that the slide-down aid (5) also has a sliding layer (7) provided between the sandwich board (6) and the scuttle (4) which prevents corrosion and reduces friction.

5. Scuttle structure according to Claim 4, characterised in that this sliding layer (7) is designed as a plastic board.

6. Scuttle structure according to Claim 4 or 5, characterised in that this sliding layer (7) is designed as a layer of micro-encapsulated lubricant.

7. Scuttle structure according to one or more of the preceding clams, characterised in that a connection, releasable after shearing stress caused by a head-on collision, is provided between the slide-down aid (5) and the scuttle (4), or between the sandwich board (6), the sliding layer (7) and the scuttle (4), in the form of, for example, rivets or screws (expansion screws).

8. Scuttle structure according to one or more of the preceding claims, characterised in that the sandwich board (6) consists of an upper board (8) fastened to the scuttle (4) and a lower board (9) connected to the upper plate (8) by means of webs (10) which may be destroyed after shearing stress caused by a head-on collision.

9. Scuttle structure according to Claim 8, characterised in that the connection between upper board (8) and scuttle (4) is preserved in the event shearing of stress caused by a head-on collision.

10. Scuttle structure according to Claim 8 or 9, characterised in that the design of the webs (10) initiates a movement of the lower plate parallel to the sliding-down surface.

11. Scuttle structure according to one or more of the preceding claims 2 to 10, characterised in that the sandwich board (6) is made of brittle plastic.

## Revendications

1. Structure de cloison séparatrice pour un véhicule automobile dont le groupe propulseur est placé à l'avant, comprenant une cloison séparatrice pour le groupe propulseur, lequel est déplacé vers l'arrière lors d'une collision frontale, caractérisée par une aide au glissement vers le bas (5) qui est fixée à la cloison séparatrice (4), de manière qu'une partie au moins de cette aide (5) glisse vers le bas, le long de la paroi séparatrice (4), à la suite d'une sollicitation au cisaillement provoquée par une collision frontale.

2. Structure de cloison séparatrice selon la revendication 1, caractérisée en ce que l'aide au glissement vers le bas (5) comprend un panneau sandwich (6).

3. Structure de cloison séparatrice selon la revendication 2, caractérisée en ce que le panneau sandwich (6) est réalisé de manière que des parties du groupe propulseur (1) s'enfoncent dans ce panneau (6) à la suite d'une collision frontale, s'accrochent dans ce panneau et exercent une sollicitation au cisaillement sur lui.

4. Structure de cloison séparatrice selon la revendication 2 ou 3, caractérisée en ce que l'aide au glissement vers le bas (5) comprend en outre une couche de glissement (7) prévue entre le panneau sandwich (6) et la cloison séparatrice (4), couche qui empêche la corrosion et diminue le frottement.

5. Structure de cloison séparatrice selon la revendication 4, caractérisée en ce que la couche de glissement (7) est constituée par une plaque de matière plastique.

6. Structure de cloison séparatrice selon la revendication 4 ou 5, caractérisée en ce que la couche de glissement (7) est une couche constituée de lubrifiant micro-encapsulé.

7. Structure de cloison séparatrice selon une ou plusieurs des revendications précédentes, caractérisée en ce qu'une liaison, pouvant être défaite à la suite d'une sollicitation au cisaillement provoquée par une collision frontale, est prévue entre l'aide au glissement vers le bas (5) et la cloison séparatrice (4), ou entre le panneau sandwich (6), la couche de glissement (7) et la cloison séparatrice (4), liaison qui est établie par exemple à l'aide de rivets ou de vis (vis à tige ductiles).

8. Structure de cloison séparatrice selon une ou plusieurs des revendications 2 à 7 précédentes, caractérisée en ce que le panneau sandwich (6) est composé d'une plaque supérieure (8) fixée à la cloison séparatrice (4) et d'une plaque inférieure (9) qui est reliée à la plaque supérieure (8) par des entretoises (10) susceptibles d'être détruites à la suite d'une sollicitation au cisaillement provoquée par une collision frontale.

9. Structure de cloison séparatrice selon la revendication 8, caractérisée en ce que la liaison entre la plaque supérieure (8) et la cloison séparatrice (4) est conservée lors d'une sollicitation au cisaillement provoquée par une collision frontale.

10. Structure de cloison séparatrice selon la revendication 8 ou 9, caractérisée en ce que les entretoises (10) sont conformées de manière qu'elles amorcent un mouvement de la plaque inférieure parallèlement à la surface de glissement vers le bas.

11. Structure de cloison séparatrice selon une ou plusieurs des revendications 2 à 10 précédentes, caractérisée en ce que le panneau sandwich (6) est fabriqué de matière plastique cassante.
